Europäisches Patentamt

European Patent Office

Office européen des brevets

(19)

(11) Veröffentlichungsnummer: **0 160 881**
**A2**

(12) # EUROPÄISCHE PATENTANMELDUNG

(21) Anmeldenummer: 85104871.0

(22) Anmeldetag: 22.04.85

(51) Int. Cl.⁴: **B 29 D 12/00**
G 03 B 21/64

(30) Priorität: 07.05.84 DE 3416761
07.05.84 DE 3416760

(43) Veröffentlichungstag der Anmeldung:
13.11.85 Patentblatt 85/46

(84) Benannte Vertragsstaaten:
AT BE CH FR GB IT LI LU NL SE

(71) Anmelder: Geimuplast Peter Mundt GmbH & Co KG
Partenkirchner Str. 50
D-8105 Farchant(DE)

(72) Erfinder: Mundt, Peter
Wankweg 9
D-8100 Garmisch-Partenkirchen(DE)

(72) Erfinder: Neuhold, Arnold
Esterbergstrasse 37a
D-8105 Farchant(DE)

(74) Vertreter: Lorenz, Eduard et al,
Rechtsanwälte Eduard Lorenz - Bernhard Seidler Margrit
Seidler - Dipl.-Ing. Hans-K. Gossel Dr. Ina Philipps - Dr.
Paul B. Schäuble Dr. Siegfried Jackermeier
Widenmayerstrasse 23 D-8000 München 22(DE)

(54) Verfahren zum Herstellen von Diapositiv-Rähmchen.

(57) Die Erfindung bezieht sich auf ein Verfahren zum Herstellen von elastisch aufweitbaren Diapositiv-Rähmchen aus wenigstens einer extrudierten Kunststoff-Folie, die durch Kleben oder Ultraschweißen miteinander zu einem Rähmchen verbunden werden, bei welchem die Bildfenster-Ausschnitte sowie die Außenkontur der Rähmchen ausgestanzt werden. Zu dem Zweck, die bekannten Verfahren dieser Art derart zu vereinfachen, daß die Rähmchen mit geringeren Kosten hergestellt werden können, wird das Filmbett für das Diapositiv in wenigstens eine von zwei Folien eingeprägt.

EP 0 160 881 A2

## B e s c h r e i b u n g

Die Erfindung bezieht sich auf ein Verfahren zum Herstellen von Diapositiv-Rähmchen nach dem Oberbegriff des Patentanspruchs 1.

Nach einem bekannten Verfahren dieser Gattung wird das Rähmchen aus drei extrudierten Kunststoff-Folien zusammengeklebt. In der mittleren Folie ist ein ausgestanztes Filmbett für das Diapositiv angeordnet. An den Folien werden zunächst die Bildfenster und das Filmbett ausgestanzt, dann die Folien verklebt und schließlich die Außenkanten ausgestanzt. Die drei Kunststoff-Folien bedingen in einer Vorrichtung zur Durchführung des bekannten Verfahrens einen entsprechenden Aufwand, insbesondere für drei Vorratsrollen, drei Paar aneinandergepreßter Zuführwalzen, zwei Klebeeinrichtungen und einen Drucker. Am Schluß der Vorrichtung ist eine Verpackungseinrichtung vorgesehen, in welcher die Diapositiv-Rahmen mittels Schrumpffolien verpackt werden. Das bekannte Verfahren ist kompliziert, weil die Diapositiv-Rähmchen aus drei Folienbahnen hergestellt werden müssen.

Der Erfindung liegt die Aufgabe zugrunde, das bekannte Verfahren derart zu vereinfachen, daß die Rähmchen mit geringeren Kosten hergestellt werden können.

Die Lösung der gestellten Aufgabe erfolgt gemäß dem Kennzeichen des Patentanspruchs 1 oder gemäß dem Kennzeichen des Patentanspruchs 4. Der Vorteil des erfindungsgemäßen Verfahrens besteht darin, daß das Diapositiv-Rähmchen aus zwei Kunststoff-Folien, vorzugsweise sogar nur aus einer einzigen Kunststoff-Folie, hergestellt werden kann. Dementsprechend ist auch eine Vorrichtung zur Durchführung des erfindungsgemäßen Verfahrens oder eine Anlage aus mehreren derartigen Vorrichtungen weniger aufwendig. Das erfindungsgemäße Verfahren kann auf Anlagen mit acht oder mehr Nutzen (Straßen bzw. Bahnen) neben- und/oder hintereinander durchgeführt werden. Durch das erfindungsgemäße Verfahren kann ein Diapositiv-Rähmchen aus Kunststoff hinsichtlich der Herstellungskosten mit einem solchen aus Pappe konkurrieren. Der Ausstoß des erfindungsgemäßen Verfahrens ist auch höher als bei den bekannten ein- oder zweiteiligen Diapositiv-Rähmchen aus Kunststoff, die in einem Spritzgießverfahren hergestellt werden. Denn in der Spritzgießtechnik läßt sich der Ausstoß aufgrund der Dünnwandigkeit der Teile nicht so weit steigern, wie dies beim erfindungsgemäßen Verfahren möglich ist.

Im Vergleich zu den bekannten zweiteiligen Kunststoff-Rähmchen, die im Spritzgießverfahren hergestellt werden, hat das erfindungsgemäße Verfahren folgende Vorteile: Es erfolgt eine Einsparung an Energie. Denn die Spritzgießmaschinen sind wegen der zur Anwendung gelangenden hohen Drücke energieaufwendig. Es erfolgt aber auch eine Einsparung an Personal, weil das erfindungsgemäße Verfahren kontinuierlich abläuft. Dementsprechend entfallen das Überführen der Rahmen-Teile von der Spritzgießmaschine auf die Schweißmaschine und das Einfüllen der Rahmen-Teile in die Magazine der Schweißmaschine. Ferner entfällt eine Zwischenspeicherung zwecks Kontrolle vor der Verpackung der Diapositiv-Rähmchen. Demgegenüber läßt sich das erfindungsgemäße Verfahren auf einer sog. Kompakt-Anlage durchführen, auf welcher die Diapositiv-Rahmen erst nach ihrer Verpackung von Hand weiterbefördert zu werden brauchen.

Der Vorteil des Verfahrens nach Patentanspruch 5 liegt darin, daß eine Vorbehandlung der Kunststoff-Folie bzw. -Folien durch Erwärmen entfällt. Ferner kann der Prägestempel in das Stanzwerkzeug integriert werden.

0160881

Der Vorteil des Verfahrens nach Patentanspruch 6 besteht darin, daß jede beliebige Kontur, die von in einem Spritzgießverfahren hergestellten Diapositiv-Rähmchen aus Kunststoff bekannt ist, in das Rähmchen mit eingeprägt werden kann. Ferner ist die Oberfläche eines derart hergestellten Rähmchens auf beiden Seiten glatt.

Das Verfahren nach Anspruch 7 hat den Vorteil, daß zwei benachbarte Diapositiv-Rahmen beim Rahmentransport vom Magazin in den Projektor mit ihren Außenkonturen nicht verhaken können. Ein weiterer Vorteil besteht darin, daß beim Verpacken eines erfindungsgemäß hergestellten Diapositiv- Rahmens in Taschen aus Kunststoff-Folien keine Beschädigung der Kunststoff-Folie durch scharfe Kanten möglich ist.

Das Verfahren nach Anspruch 8 hat den Vorteil, daß ein Verhaken zweier benachbarter Diapositiv-Rähmchen an ihren Bildfenstern ausgeschlossen ist, wann auch immer wenigstens zwei Rähmchen gegeneinander bewegt werden müssen.

Das Verfahren nach Anspruch 9 hat den Vorteil, daß der Drucker des bekannten Verfahrens eingespart werden kann.

Das Verfahren nach Anspruch 10 hat den Vorteil, daß das Diapositiv, obwohl eine Wölbung desselben nie zu vermeiden ist, auch an der hinteren Kante des Bildfensters einwandfrei eingeführt werden kann, ohne daß die hintere Bildfensterkante in der Ebene einer Kunststoff-Folie V-förmig ausgebildet sein muß.

Das Verfahren nach Anspruch 11 hat den Vorteil, daß das Diapositiv einwandfrei im Bildfenster fixiert ist. Es ist nämlich ein genereller Vorteil des Heißprägens im Rahmen des erfindungsgemäßen Verfahrens, daß Außenseite und und Innenseite des Diapositiv-Rähmchens unabhängig voneinander verformt bzw. gestaltet werden können, während beim Kaltprägen jede Verformung der einen Seite der Folie auf der anderen derselben in Erscheinung tritt.

Das bekannte Verfahren ist auch zum Herstellen eines in einem Einführschlitz für das Diapositiv aufweitbar ausgebildeten Diapositiv-Rahmens geeignet. Zu diesem Zweck ist in einem der Außenteile des Rähmchens an der Einführseite für das Diapositiv ein umgekehrt U-förmiger Einführschlitz ausgestanzt. Die Aufweitung des Einführschlitzes zwecks Einführens des Diapositivs erfolgt mittels Aufweitstiften, die durch in dem anderen Außenteil des Rähmchens angeordnete Bohrungen hindurchtreten (vgl. DE-PS 1 214 898).

Demgegenüber hat die Aufweitung nach Anspruch 13 den Vorteil, daß die beiden Kunststoff-Folien zur Bildung des Diapositiv-Rähmchens zwecks Herbeiführung eines Einführschlitzes keiner besonderen Bearbeitung bedürfen und infolgedessen gleich ausgebildet sein können. Die im erfindungsgemäßen Verfahren zur Anwendung gelangende Aufweitung im einzelnen ist aus der AT-PS 276 804 Fig. 2 und 3 bekannt.

Bei einem Diapositiv-Rahmen aus Pappe oder einem ähnlich kompressiblen Werkstoff war es bereits bekannt gewesen (= US-PS 2 390 053 aus 1945), diesen aus zwei Teilen herzustellen, die miteinander verbunden sind. Dabei sind in jedem Rahmenteil durch Prägen je eine Hälfte des Bildfensters und einer Einführungs-Öffnung für das Diapositiv, die ineinander übergehen, hergestellt. Um das Diapositiv gleichwohl daran zu hindern, durch die Einführungs-Öffnung hindurch aus dem Diapositiv-Rahmen herauszugleiten, sind in der Einführungs-Öffnung je zwei Haltenocken angeordnet, die zueinander im wesentlichen in Berührung stehen, aufgrund ihres zusammenpreßbaren Werkstoffs jedoch in ausreichendem Maße ausweichen können, damit ein Diapositiv zwischen ihnen hindurch in den Rahmen eingeführt und aus dem Rahmen wieder herausgeführt werden kann.

Da Kunststoff jedoch ein inkompressibler Werkstoff ist, hat die technische Entwicklung auf dem Gebiete der Diapositiv-Rahmen aus hartem, elastischem Kunststoff die eingangs geschilderte technische Entwicklung genommen, ohne daß in einem Zeitraum von etwa vier Jahrzehnten jemals auch nur der Versuch unternommen worden wäre, bei der Herstellung von Diapositiv-Rahmen aus Kunststoff überhaupt einen Verfahrensschritt des Prägens durchzuführen. Erst recht hat die Fachwelt nicht die erfindungsgemäße Konzeption erkannt, einerseits allein das Filmbett ohne eine anschließende Einführungs-Öffnung zu prägen, so daß das Diapositiv ohne zusätzliche Konstruktionselemente gerade im Bildfenster festgehalten wird und das Diapositiv den Rahmen nicht durch eine Einführungs-Öffnung verlassen kann, und andererseits gleichwohl den Vorteil der bekannten Diapositiv-Rahmen aus elastischem Kunststoff aufrechtzuerhalten, die Elastizität des Werkstoffs dazu auszunutzen, die Einführungsöffnung durch die auf den Einführ- oder Entnahmevorgang des Diapositivs beschränkte, vorübergehende Bildung eines Einführschlitzes für das Diapositiv entbehrlich zu machen. Es waren also durch die Erfindung zwei einander an sich widerstreitende Anforderungen miteinander zu vereinen, nämlich einerseits auf den elastisch aufweitbaren Einführschlitz nicht zu verzichten und andererseits gleichwohl den Rahmen durch Prägen mit einem vorzugsweise umlaufend geschlossenen Bildfenster zu versehen. Diese Erfindungskonzeption war ausweislich der geschilderten technischen Entwicklung für den durchschnittlichen Fachmann nicht nahegelegt gewesen.

Eine Verbesserung sowie eine weitere Ausbildung des bisher beschriebenen Verfahrens ist Gegenstand der Ansprüche 14 bis 18. Der Vorteil eines Verfahrens gemäß diesen Ansprüchen besteht darin, daß die Diapositiv-Rahmen auch aus einem einzigen Folienband hergestellt werden können, ohne daß der Diapositiv-Rahmen als Scharnier-Rahmen ausgebildet sein müßte. Dementsprechend vereinfacht sich auch die Anlage bzw. Vorrichtung zur Durchführung des Verfahrens, weil nur eine Zuführvorrichtung für ein Folienband erforderlich ist und weil darüber hinaus auch eine zweite Stanze eingespart wird. Ein weiterer Vorteil des Verfahrens nach Anspruch 14 besteht darin, daß die Diapositiv-Rahmen auch aus einem einzigen Folienband hergestellt werden können, ohne daß der Diapositiv-Rahmen als Scharnier-Rahmen ausgebildet sein müßte. Dementsprechend vereinfacht sich auch die Anlage bzw. Vorrichtung zur Durchführung des erfindungsgemäßen Verfahrens, weil nur eine Zuführvorrichtung für ein Folienband erforderlich ist und weil darüber hinaus auch eine zweite Stanze eingespart wird. Ein weiterer Vorteil des Verfahrens nach Anspruch 1 besteht darin, daß eine Stanze die Außenkonturen sowohl der Oberteile als auch der Unterteile herstellt, was den weiteren Vorteil mit sich bringt, daß beide absolut deckungsgleich hergestellt werden. Dieselbe Stanze verbindet und/oder stapelt gleichzeitig die hergestellten Oberteile und Unterteile der Rahmen, so daß sie schon als Stapel geordnet einer Verpackungsmaschine zugeführt werden können.

Die Abänderung des erfindungsgemäßen Verfahrens, wie sie Gegenstand des Anspruchs 15 ist, hat den Vorteil, daß das Verbinden von Oberteil und Unterteil nicht nur durch Kleben, sondern auch durch Ultraschall-Schweißen erfolgen kann. Ferner ist der Vorteil vermittelt, daß der Verfahrensschritt des Verbindens von Oberteil und Unterteil auch in eine an sich bekannte Rahmungsmaschine verlegt und dort durchgeführt werden kann.

Der Vorteil des Verfahrens nach Anspruch 17 besteht darin, daß der Film mit seinen Diapositiven in das Filmbett gedrückt und dort arretiert werden kann und daß er darüber hinaus gleichzeitig auch im Filmbett geklemmt wird, so daß er sich nicht hin- und herbewegen kann. Ein dritter Vorteil dieses Verfahrensschrittes besteht darin, daß der Film vorgespannt wird, was während der Projektion einen Antipopping-Effekt zur Folge hat.

Das Verfahren nach Anspruch 18 hat den Vorteil, daß die Folienbahn und damit die Diapositiv-Rahmen bzw. Rahmenhälften oben und unten eine verschiedene Farbe aufweisen können und daß gleichwohl die Mittelschicht der Folienbahn für eine hundertprozentige Abfallverwertung ausgenutzt werden kann.

Die Erfindung ist in der nachstehenden Beschreibung anhand der Zeichnung in verschiedenen Ausführungsformen beispielhaft erläutert: Es zeigen

Fig. 1     in schematischer Darstellung eine Anlage
           zur Herstellung von Dia-Rähmchen nach dem
           erfindungsgemäßen Verfahren;

Fig. 2     bis
Fig. 8     eine Ausführungsform des Kaltprägeverfahrens
           in den verschiedenen Stationen;

Fig. 9     bis
Fig. 15    eine Ausführungsform des Heißprägeverfahrens
           in den verschiedenen Stationen;

Fig. 16    ein nach der zuletzt beschriebenen Ausführungsform hergestelltes Scharnier-Rähmchen im aufgeklappten Zustand sowie

Fig. 17    eine Draufsicht auf eine Längskante eines
           Rähmchens nach Fig. 16 und

Fig. 18 bis

Fig. 27 eine abgewandelte Vorrichtung zur Durchführung des Verfahrens nach den Ansprüchen 14 ff in einer Seitenansicht und

Fig. 29 in einer Draufsicht;

Fig. 30 einen Schnitt durch eine Folienbahn und

Fig. 31 einen solchen durch zwei Rahmen-Hälften, die übereinander liegen.

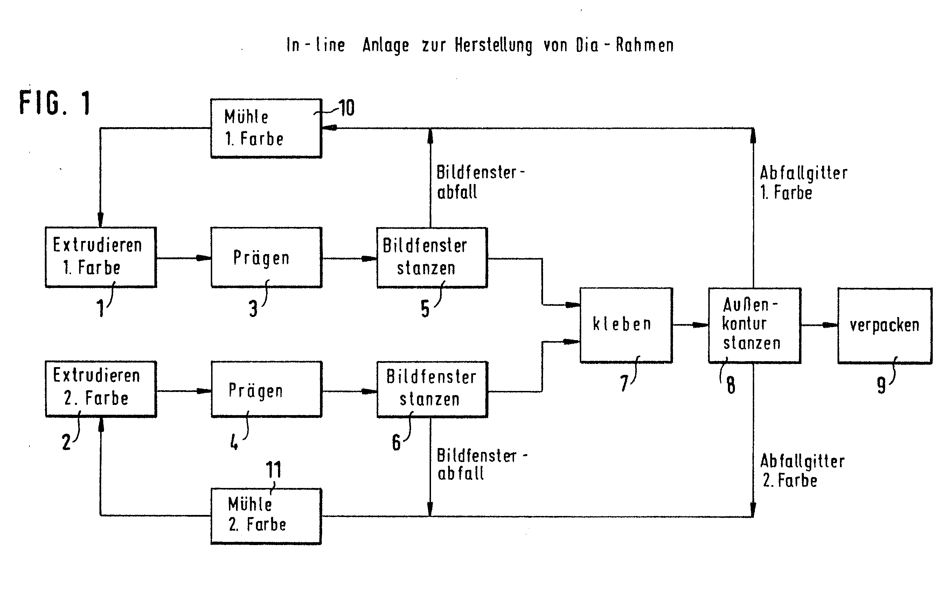

In Fig. 1 sind die Extrudier-Stationen 1,2 ersichtlich. In jeder Station wird eine Kunststoff-Folienbahn extrudiert. Dadurch ist es möglich, das Dia-Rähmchen zweifarbig herzustellen.

An die Extrudier-Stationen 1,2 schließen sich für je eine Kunststoff-Folienbahn je eine Präge-Station 3,4 an. Als nächste Bearbeitungsstationen folgen je Folienbahn eine Stanzstation 5,6 zum Ausstanzen der Bildfenster aus jeder Folienbahn.

Anschließend werden die Folienbahnen übereinandergeführt und in einer Klebe-Station 7 miteinander verbunden. - In einer nicht dargestellten, abweichenden Ausführungsform können die Folienbahnen hier auch durch Ultraschallschweißen miteinander verbunden werden. - In einer anschließenden, vorletzten Bearbeitungsstation 8 werden die Außenkonturen der Dia-Rähmchen aus den miteinander verbundenen, beiden Folienbahnen ausgestanzt. Von hier aus gelangen die fertiggestellten Diapositiv-Rahmen in eine Verpackungsstation 9, in welcher sie in der gewünschten Verkaufs-Stückzahl mit Schrumpffolien verpackt werden.

Der durch das Ausstanzen der Bildfenster anfallende Kunststoffabfall jeder Folie wird je einer Mühle 10 bzw. 11
zugeführt, so daß in jeder Mühle nur einfarbiger Kunststoff-
Abfall zurückgewonnen wird. In gleicher Weise wird mit den
Abfallgittern verfahren, die in der Bearbeitungsstation 8
beim Ausstanzen der Außenkontur des Dia-Rähmchens aus jeder
der beiden Folienbahnen anfallen, indem die Abfallgitter
nach Farbe getrennt werden. Der in den beiden Mühlen 10, 11
zur weiteren Verarbeitung zurückgewonnene Kunststoff wird
in den Bearbeitungsstationen 1,2 den Extrudern wieder zugeführt.

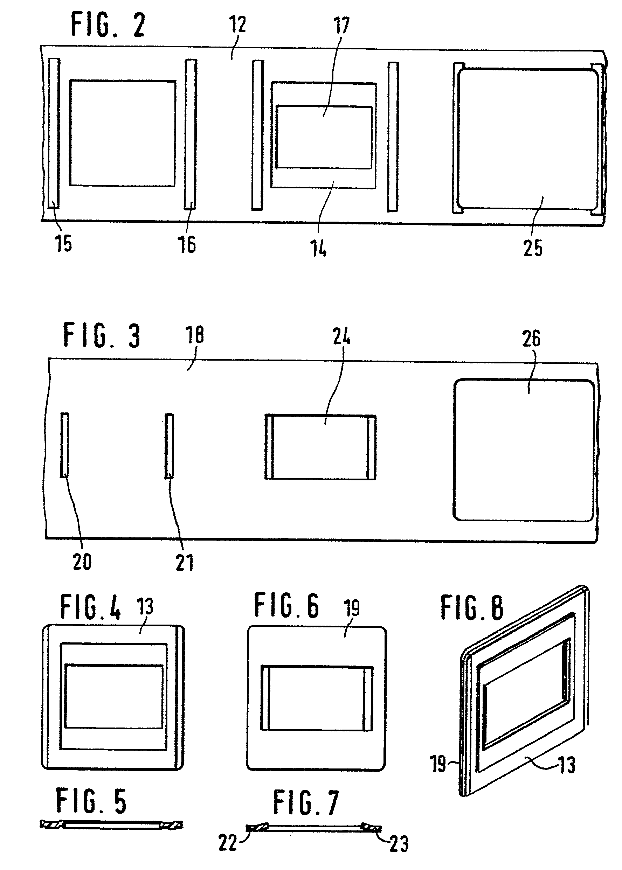

In Fig. 2 ist die Folienbahn 12 dargestellt, aus welcher das
in Fig. 4 in einer Außen-Ansicht und in Fig. 5 in einem Schnitt
wiedergegebene Oberteil 13 ausgestanzt wird. Das Filmbett 14
sowie die Aufweitränder 15, 16 werden durch Kaltprägen hergestellt. Das Bildfenster 17 wird durch Stanzen hergestellt.

In Fig. 3 ist die Folienbahn 18 dargestellt, aus welcher das
in Fig. 6 in einer Außen-Ansicht und in Fig. 7 in einem Schnitt
wiedergegebene Unterteil 19 des Dia-Rahmens ausgestanzt wird.
Die Außenseite des Unterteils 19 besitzt eine glatte Oberfläche.

In der Folienbahn 18 werden gemäß Fig. 3 Filmklemmungsrippen
20, 21 sowie die aus Fig. 7 ersichtlichen Antipoppingslippen
22, 23 durch Kaltprägen hergestellt. Das Bildfenster 24 wird
durch Ausstanzen hergestellt.

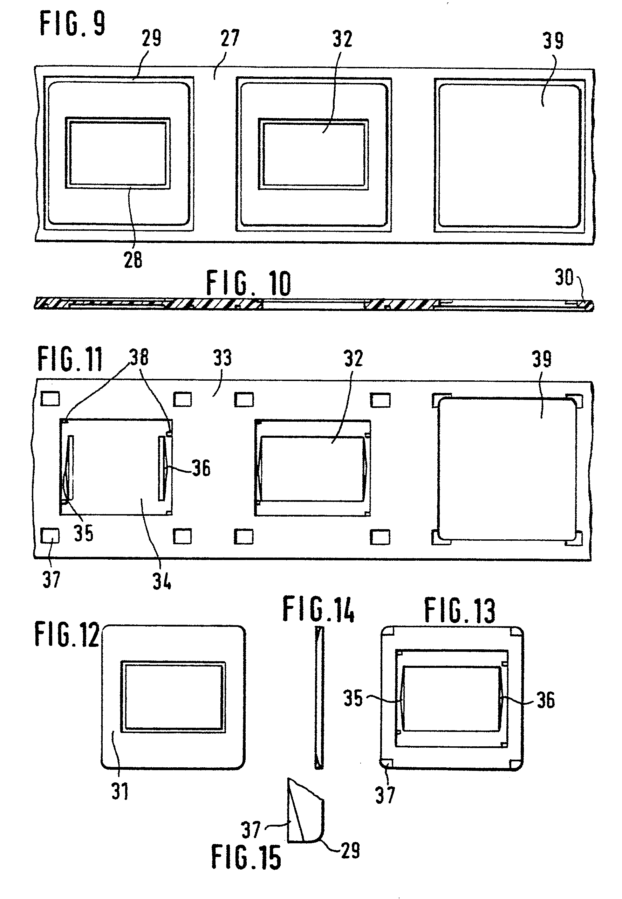

Nachdem die Folienbahnen 12 und 18 übereinandergeführt worden
sind, werden durch Stanzen die abgerundeten Außenkanten 25,
26 des in Fig. 8 dargestellten Dia-Rahmens gemeinsam hergestellt. In Fig. 8 ist der Blick auf das Oberteil 13 gerichtet, während das glatte Unterteil 19 dem Auge abgewandt ist.

Das nunmehr zu beschreibende Heißprägeverfahren läuft wie
folgt ab:

In die in Fig. 9 dargestellte Oberseite 27 der Folienbahn 30 werden durch Heißprägen eine Bildfenster-Einrahmung 28 und ein mit Radius umlaufender Rand 29 hergestellt. Darüber hinaus können beliebige Schriftzug-Gravuren durch Heißprägen hergestellt werden. Aus der Folienbahn 30 wird das Oberteil 31 des Dia-Rahmens hergestellt, auf dessen Außenseite Fig. 12 eine Draufsicht zeigt. Das Bildfenster 32 wird durch Ausstanzen hergestellt.

Fig. 10 zeigt den Schnitt durch die Folienbahn 30.

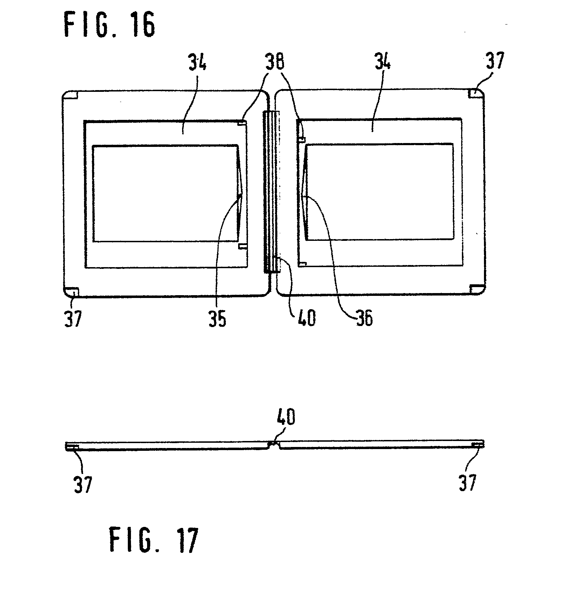

In Fig. 11 ist die Unterseite 33 der Folienbahn 30 dargestellt, aus der die Innenseite des Diarahmen-Oberteiles gebildet wird. In der aus Fig. 11 ersichtlichen ersten Bearbeitungsstation werden durch Heißprägen hergestellt ein Filmbett 34, zwei gegenüberliegende Einführschrägen 35,36 für das Diapositiv, vier Aufweitkerben, von welchen eine mit der Bezugszahl 37 versehen ist, sowie vier Filmklemmungen, von welchen zwei mit der Bezugszahl 38 versehen sind. Die Aufweitkerben sind auch in Fig. 13 und in den vergrößertem Maßstab in Fig. 15 dargestellt. Sie dienen zum Einführen und Angreifen der nichtdargestellten Keile, mit deren Hilfe gemäß Patentanspruch 13 die Aufweitung des Einführschlitzes für das Diapositiv herbeigefügt wird.

In der nächsten Bearbeitungsstation wird aus der Folienbahn 30 das Bildfenster 32 durch Ausstanzen hergestellt. Es folgt nun das Übereinanderführen der Folienbahn 30 und einer zweiten, nicht dargestellten, vorzugsweise identisch ausgebildeten Folienbahn, und zwar Innenseite gegen Innenseite, sowie deren Verbinden durch Kleben oder Ultraschall-Schweißen. Das Zusammenführen der Folienbahn ist schematisch in Fig. 1 dargestellt. In einer weiteren Bearbeitungsstation werden dann vorzugsweise gemeinsam die Außenkanten 39 des Diapositiv-Rahmens durch Stanzen hergestellt.

In Fig. 16 ist ein nach dem erfindungsgemäßen Verfahren hergestelltes Scharnier-Rähmchen dargestellt. Die Herstellung der einzelnen Teile erfolgt durch die oben erläuterten Verfahrensschritte, wobei das Scharnier 40 durch Heißprägen hergestellt wird. Das Filmbett ist wieder jeweils mit der Bezugszahl 34, V-förmige Einführungsschrägen mit den Bezugszahlen 35, 36, die Aufweitkerbe mit der Bezugszahl 37 und die Filmklemmnocken mit der Bezugszahl 38 versehen.

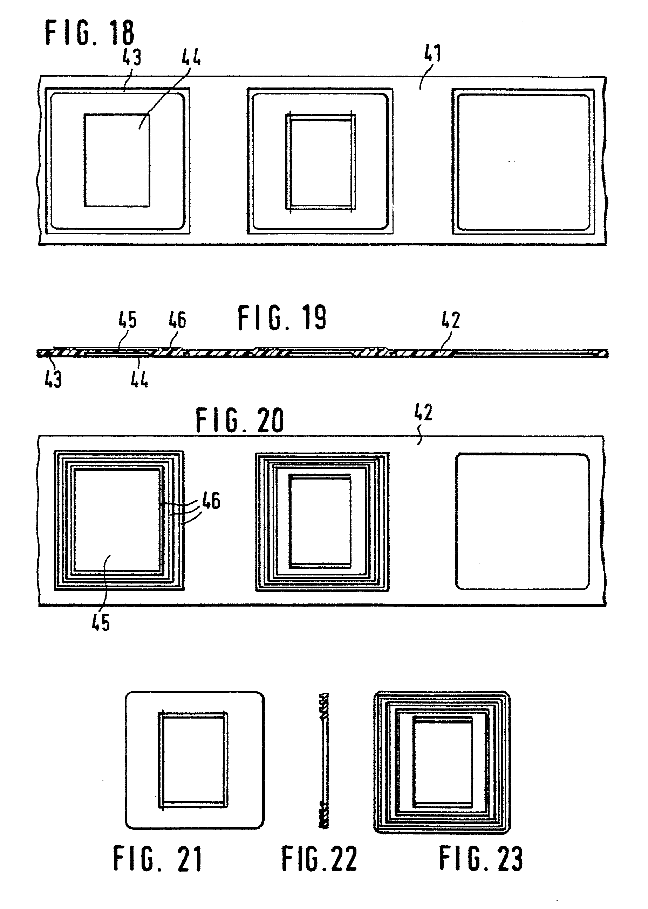

Das Heißprägen der Diapositiv-Rahmen hat, wie bereits erwähnt, den Vorteil, daß einerseits alle Konturen und Schriftzug-Gravuren hergestellt werden können, die auch ein im Spritzgeißverfahren hergestellter Diapositiv-Rahmen aufweist und daß andererseits die Diarahmen in einer Kompaktanlage mit hohem Ausstoß und geringen Personalkosten produzierbar sind. Um die Verformungsdrücke beim Heißprägen zu reduzieren, ist es darüber hinaus vorteilhaft, das Rähmchen so zu gestalten, daß nur geringe Materialmengen verdrängt werden müssen. Das Herstellungsverfahren eines derartigen Ausführungsbeispiels ist in den Fig. 18 bis 27 dargestellt.

Fig. 18 zeigt die Oberseite 41 der Folienbahn 42, aus der der obere Teil der Dia-Rahmen hergestellt wird. In der ersten Station werden der umlaufende Rand 43, der Bildfensterrahmen 44, das Filmbett 45 und die Abstandsrippen 46 eingeprägt. Die Fig. 19 stellt einen Schnitt durch die Filmbahn 42 dar.

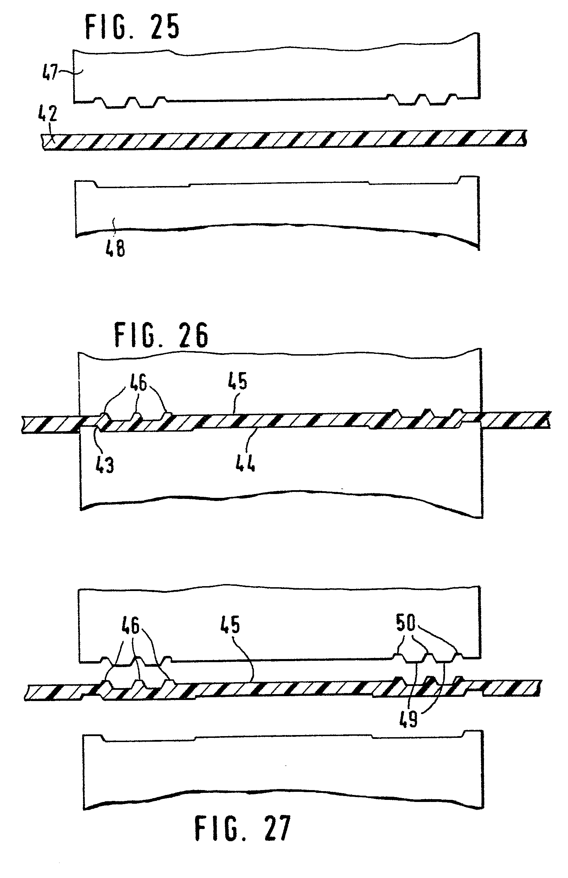

Der Prägevorgang wird in Fig. 25, 26 und 27 vergrößert dargestellt.

Der Prägestempel 47 erzeugt die Innenkonturen des Diapositiv-Rahmens; der Prägestempel 48 die Außenkontur.

Wie bereits erwähnt, ist bei der dargestellten Methode des Heißprägens der Prägestempel 47 derartig geformt, daß das durch das eindringende Profil 49 verdrängte Material in entsprechende Nuten 50 fließt, wodurch an der Folienbahn 42 die Abstandsrillen 46 entstehen, wobei die innerste Abstandsrippe die Filmbettbegrenzung ergibt und die äußere Abstandsrippe die innere Begrenzung des Aufweitschlitzes bildet.

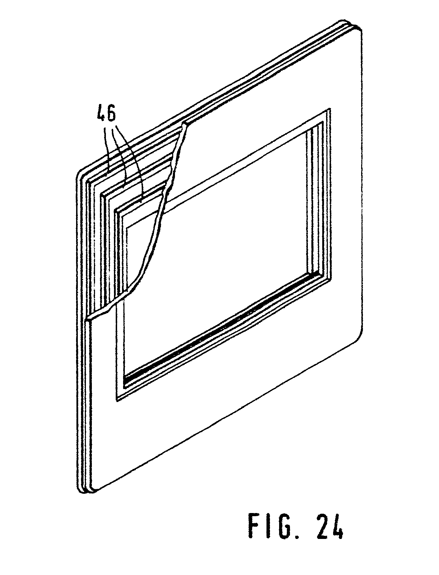

Das weitere Verfahren der Herstellung von Diapositiv-Rahmen läuft wie bereits beschrieben. Fig. 21 zeigt die Oberseite eines Diapositiv-Rahmens; Fig. 22 zeigt einen Schnitt durch das Oberteil des Diapositiv-Rahmens; in Fig. 23 wird die Innenseite des Diapositiv-Rahmens dargestellt. Fig. 24 zeigt einen verklebten, kompletten Diapositiv-Rahmen.

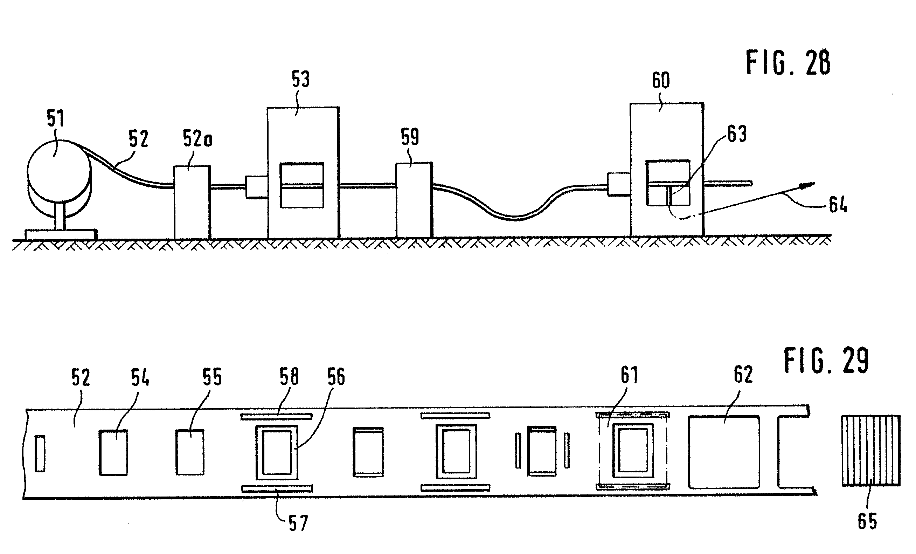

Zu der Ausführungsform gemäß den Fig. 28 bis 31: Mittels einer Abwickelmaschine 51 wird eine Folienbahn 52 aus extrudiertem, elastischem Kunststoff schrittweise vorwärtsbewegt. Zunächst wird sie einer Druckeinrichtung 52a zugeführt. Von dort gelangt die Folienbahn 52 in einen Stanzautomaten 53.

Wie sich am besten aus Fig. 29 ergibt, wird die Folienbahn 52 pro Vorschubtakt um etwa die doppelte Rahmen-Breite vorwärtsbewegt. In dem Stanzautomaten 53 können infolgedessen in einem einzigen Arbeitstakt die Bildfenster 54 und 55 für je ein Oberteil und ein Unterteil des Rahmens ausgestanzt werden. In einem zweiten Arbeitstakt werden das Filmbett 56 sowie die Aufweitränder 57, 58 geprägt. Nachdem das Band mittels Durchführens durch eine nicht dargestellte Absaugeinrichtung gereinigt worden ist, wird es in einem dritten Arbeitsakt durch einen Lösungsmittel-Spender 59 geführt, in welchem auf jedes zweite Rahmenteil ein Klebemittel aufgebracht wird. Der Lösungsmittel-Spender ist darüber hinaus mit einer nicht dargestellten Absaugvorrichtung zum Reinigen des Bandes ausgebildet. Das Folienband 52 wird dann einem zweiten Stanzautomaten 60 zugeführt, und zwar mit einem Vorschubtakt von jeweils etwa einer Rahmen-Breite. In diesem Stanzautomaten werden mittels eines einzigen Stanzstempels, der der Außenkontur des Rahmens entspricht, nacheinander je ein Oberteil 61 und ein Unterteil 62 ausgestanzt. In dem Stanzautomaten 60 ist ferner ein Schacht 63 ausgestanzt. In dem Stanzautomaten 60 ist ferner ein Schacht 63 angeordnet. In diesem werden je ein Oberteil und je ein Unterteil übereinanderliegend gestapelt und dann unterhalb der Schnittplatte miteinander verbunden. Die Diapositiv-Rahmen werden anschließend gestapelt und geordnet in Richtung des Pfeiles 64 einer nicht dargestellten Verpackungsmaschine zugeführt.

In Abänderung des geschilderten Ausführungsbeispiels des erfindungsgemäßen Verfahrens kann der an den Stanzschritt im Stanzautomaten 53 anschließende Verfahrensschritt des Aufbringens eines Lösungsmittels entfallen, so daß die Rahmenteile im Stanzautomaten 60 auch nicht miteinander verbunden, sondern nur geordnet und gestapelt werden. Das Verbinden der Rahmenteile erfolgt dann nach dem Stanzen der Außenkonturen derselben, d.h. nach dem zweiten Stanzautomaten 60, beispielsweise innerhalb einer Rahmungsvorrichtung. In dieser kann dann die Verbindung der beiden Rahmenteile auch durch Ultraschall-Schweißen herbeigeführt werden.

Das Einprägen einer an wenigstens einer Bildfensterkante angeordneten und einwärtsgerichteten Abschrägung gemäß Anspruch 17 erfolgt in dem gleichen Arbeitstakt, in welchem auch die bereits geschilderten Prägungen durchgeführt werden.

In Fig. 29 ist schematisch eine Verpackungsmaschine 65 mit einer Stapelvorrichtung dargestellt.

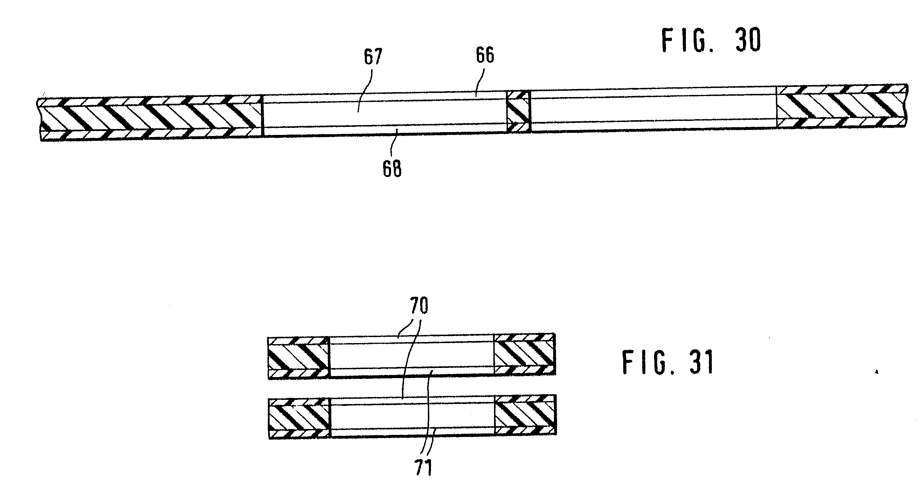

Aus Fig. 30 ist ersichtlich, daß die Folienbahn sich aus drei Schichten 66, 67, 68 zusammensetzt. Die Außenschicht 66 wird beispielsweise aus blauem Kunststoff und die andere Außensicht 68 beispielsweise aus grünem Kunststoff hergestellt. In der Mittelschicht 67 kann infolgedessen auch mehrfarbig gemischtes Abfallmaterial verwertet werden.

Das in Fig. 31 schematisch dargestellte, zweiteilige Diapositiv-Rähmchen läßt erkennen, daß die aus dem Folienband 52 ausgestanzten Oberteile 61 und Unterteile 62 derart aufeinandergelegt werden können, daß die Rahmenteile bzw. der aus ihnen zusammengesetzte Rahmen an den Oberseiten 70 blau und an den Unterseiten 71 grün ist.

Ein Vorteil der Erfindung ist es, daß der Stanzstempel für die Außenkonturen gleichzeitig das Verbinden der Rahmenteile herbeiführt.

Für die besondere Ausbildung des Rahmens mit Antipopping-Rippen ist eine Filmklemmung herbeigeführt. Zur Funktion der Filmklemmung ist darauf hinzuweisen, daß zwei Aufgaben erfüllt werden:

1. Der Film wird in seiner Lage im Rahmen fixiert. Dies wird durch Verengung des Filmbettes und Klemmung auf zwei Seiten der Bildfensterbegrenzung erreicht.

2. Durch die Klemmung wird eine Vorwölbung des Filmes erreicht. Dadurch ist ein "Antipopp-Effekt" herbeigeführt. Die Antipopping-Rippen sind in den einzelnen Figuren verstärkt dargestellt.

P a t e n t a n s p r ü c h e

1. Verfahren zum Herstellen von vorzugsweise elastisch aufweitbaren Diapositiv-Rähmchen aus wenigstens einer extrudierten Kunststoff-Folie, die durch Kleben oder Ultraschall-
schweißen miteinander zu einem Rähmchen verbunden werden,
bei welchem die Bildfenster-Ausschnitte sowie die Außenkontur der Rähmchen ausgestanzt werden, d a d u r c h
g e k e n n z e i c h n e t , daß das vorzugsweise
umlaufend geschlossene Filmbett für das Diapositiv in
wenigstens eine von zwei Folien eingeprägt wird.

2. Verfahren nach Anspruch 1, dadurch gekennzeichnet, daß
nach dem Extrudieren zunächst das Filmbett geprägt wird.

3. Verfahren nach Anspruch 1 oder 2, dadurch gekennzeichnet,
daß in zwei extrudierte Kunststoff-Folien nach dem Prägen
des Filmbettes die Bildfensterausschnitte ausgestanzt
werden, daß anschließend die beiden Folien miteinander
verbunden werden und daß danach die Außenkontur des
Rahmens gestanzt wird.

4. Abänderung des Verfahrens nach Anspruch 1 oder 2, dadurch
gekennzeichnet, daß in eine einzige Kunststoff-Folie
vorzugsweise gleichzeitig sowohl das Filmbett als auch
ein die beiden Teile des Rähmchens verbindendes Filmscharnier eingeprägt werden und daß anschließend vorzugsweise gleichzeitig die Bildfenster-Ausschnitte sowie die
Außenkontur des Rähmchens ausgestanzt werden.

5. Verfahren nach einem der Ansprüche 1 bis 3, dadurch
gekennzeichnet, daß das Filmbett kalt geprägt wird.

- 2 -

6. Verfahren nach einem der Ansprüche 1 bis 4, dadurch gekennzeichnet, daß das Filmbett und/oder das Filmscharnier warm geprägt werden.

7. Verfahren nach Anspruch 6, dadurch gekennzeichnet, daß die Außenkontur des Rähmchens mit einer Abrundung geprägt wird.

8. Verfahren nach Anspruch 6 oder 7, dadurch gekennzeichnet, daß die Bildfensterkante mit einer Absetzung geprägt wird.

9. Verfahren nach einem der Ansprüche 6 bis 8, dadurch gekennzeichnet, daß ein Schriftzug mit eingeprägt wird.

10. Verfahren nach einem der Ansprüche 6 bis 9, dadurch gekennzeichnet, daß an der beim Einführen des Diapositivs hinteren Kante des Rähmchens eine Abschrägung mitgeprägt wird.

11. Verfahren nach einem der Ansprüche 6 bis 10, dadurch gekennzeichnet, daß auf wenigstens einer Innenseite einer Folie Klemmnocken mitgeprägt werden.

12. Verfahren nach einem der Ansprüche 1 bis 11, dadurch gekennzeichnet, daß zwecks Einführens eines Diapositivs in das Rähmchen an wenigstens einer Einführseite eine Kerbe und/oder eine Ausnehmung geformt wird.

13. Verfahren zum Herstellen eines mittels eines vorübergehend zu bildenden Einführschlitzes für das Diapositiv elastisch aufweitbar ausgebildeten Diapositiv-Rahmens nach einem der Ansprüche 1 bis 12, dadurch gekennzeichnet, daß die beiden Rahmenhälften an einer Schmalseite des Rahmens verbindungslos gelassen werden und dadurch zwischen
ihnen dort ein Spalt gebildet wird, der sich seitlich bis
in die Seitenleisten des Rahmens fortsetzt, und daß die
Aufweitung des Rahmens dadurch erfolgt, daß Keile in
Einführrichtung des Diapositivs oder von den Seitenkanten
des Rähmchens her in den Spalt eingeführt werden.

14. Verfahren zum Herstellen eines vorzugsweise elastisch
aufweitbaren Diapositiv-Rahmens aus einer extrudierten
Kunststoff-Folie, bei welchem die Bildfenster-Ausschnitte
sowie die Außenkontur der Rahmen ausgestanzt werden und
das vorzugsweise umlaufend geschlossene Filmbett für das
Diapositiv in die Folie eingeprägt wird, dadurch gekennzeichnet, daß zwecks Herstellung eines zweiteiligen und
vorzugsweise zweifarbigen Diapositiv-Rahmens aus einer einzigen Folien-Bahn die Folien-Bahn pro Vorschubtakt um
etwa die doppelte Rahmen-Breite vorwärtsbewegt wird, wobei in einem ersten Arbeitstakt die Bildfenster für Ober-
und Unterteil ausgestanzt werden, in einem zweiten Arbeitstakt das Filmbett und die Aufweitränder geprägt werden, in einem dritten Arbeitstakt auf jedes zweite Rahmenteil ein Klebemittel aufgebracht wird, daß in einer weiteren Arbeitsstation mit einem Vorschubtakt von jeweils
etwa einer Rahmenbreite nacheinander je ein Ober- und ein
Unterteil aus dem Band ausgestanzt und abschließend je ein
Oberteil und ein Unterteil übereinanderliegend miteinander verbunden werden.

15. Abänderung des Verfahrens nach Anspruch 14, dadurch gekennzeichnet, daß das Verbinden der Rahmenteile nach dem
Stanzen der Außenkonturen derselben erfolgt.

- 4 -

16. Verfahren nach Anspruch 14 oder 15, dadurch gekennzeichnet, daß ein Rahmenteil bedruckt wird, bevor die Außenkontur des Rahmens ausgestanzt wird.

17. Verfahren nach einem der Ansprüche 14 bis 16, dadurch gekennzeichnet, daß an wenigstens einer Bildfensterkante eine einwärtsgerichtete Abschrägung eingeprägt wird.

18. Verfahren nach einem der Ansprüche 14 bis 17, dadurch gekennzeichnet, daß der Diapositiv-Rahmen aus einer dreischichtigen Folienbahn hergestellt wird.

19. Diapositiv-Rahmen, der in einem Verfahren gemäß der Ansprüche 1 bis 18 hergestellt ist, dadurch gekennzeichnet, daß an zwei gegenüberliegenden Seiten der Bildfensterbegrenzung Antipopping-Rippen (22, 23) ausgebildet sind.

In - line  Anlage  zur Herstellung von Dia - Rahmen

FIG. 1

FIG. 2

12  17

15  16  14  25

FIG. 3

18  24  26

20  21

FIG. 4  13

FIG. 6  19

FIG. 8

19  13

FIG. 5

FIG. 7

22  23

FIG. 9

29  27  32  39

28

FIG. 10                                                      30

FIG. 11  38  33  32  39

36

35
37   34

FIG. 12        FIG. 14    FIG. 13

35      36

31

37      29
FIG. 15

FIG. 16

FIG. 17

FIG. 18

FIG. 19

FIG. 20

FIG. 21     FIG.22     FIG. 23

0160881

FIG. 24

FIG. 25

47

42

48

FIG. 26

46    45

43    44

46    45    50

49

FIG. 27

FIG. 28

FIG. 29

FIG. 30

67    66

68

FIG. 31

70

71

0160881